# DEMANDE DE BREVET EUROPEEN

(11) **EP 1 863 285 A1**
(43) Date de publication de la demande: **05.12.2007**
(21) Numéro de dépôt: 06290884.3
(22) Date de dépôt: 29.05.2006
(51) Int. Cl.: H04N 7/16, H04N 7/173

(54) **Procédé de traitement de messages de contrôle d'accès**

(71) Demandeur: NAGRA FRANCE SAS, 75015 Paris (FR)
(72) Inventeur: Burckard, Antoine, 78180 Montigny le Bretonneux (FR)
(74) Mandataire: Nithardt, Joel

(57) **Abrégé**

La présente invention concerne un procédé de traitement de messages de contrôle d'un ensemble de messages de contrôle destiné à accéder à un contenu chiffré reçu sous la forme d'un flux. Ces messages comportent au moins un paramètre de discrimination ayant une valeur différente pour deux messages consécutifs dans le flux et des informations d'accès à un contenu chiffré. Le procédé comporte les étapes de réception d'un message de contrôle courant, de lecture du paramètre de discrimination du message de contrôle courant, de recherche dans une mémoire, du paramètre de discrimination du message traité précédemment au message courant, de comparaison du paramètre de discrimination du message courant avec le paramètre de discrimination du message traité précédemment, et de blocage par le filtre dudit message de contrôle courant si l'étape de comparaison indique que le paramètre de discrimination du message courant est identique au paramètre de discrimination du message traité précédemment.

Le procédé est caractérisé en ce que le paramètre de discrimination est unique et différent pour chaque message d'un sous-ensemble de l'ensemble des messages de contrôle, ce sous-ensemble contenant au moins trois messages de contrôle et au plus tous les messages de contrôle de l'ensemble de messages, de sorte que, lors de l'étape de filtrage, le message courant et le message traité précédemment peuvent être non consécutifs dans le sous-ensemble de messages.

## Description

### DOMAINE TECHNIQUE

La présente invention concerne le domaine de la télévision à péage et plus précisément le domaine de la vidéo à la demande dans lequel des contenus audio/vidéo sont transmis à destination d'unités multimédia chez des utilisateurs qui ont requis ces contenus. L'invention s'applique au traitement de messages reçus par les unités multimédia et en particulier au filtrage de ces messages.

### TECHNIQUE ANTERIEURE

De façon bien connue, les contenus ou événements disponibles sous forme de vidéo à la demande (VOD = Video on demand) sont généralement chiffrés, de sorte qu'ils ne peuvent être visualisés ou utilisés que lorsque l'utilisateur a reçu la ou les clés de déchiffrement correspondantes. Ceci permet d'assurer au fournisseur de contenu qu'il est rétribué pour le contenu qu'il a distribué et que ce dernier n'est utilisé que par les personnes qui en ont l'autorisation, sans être redistribuées à d'autres.

Ces clés sont souvent envoyées sous la forme de messages de contrôle ECM. Ceux-ci sont généralement formés d'un en-tête d'une part et de la clé chiffrée d'autre part. L'en-tête comporte différentes informations telles qu'une information de parité notamment, ces informations étant décrites plus en détail plus bas.

Les clés contenues dans ces messages de contrôle ont une durée de validité déterminée, ce qui signifie qu'elles permettent de déchiffrer un contenu correspond à une durée prédéfinie de visualisation ou d'utilisation de l'événement. Cette durée, nommée cryptopériode est généralement comprise entre quelques secondes, par exemple 2 secondes et quelques minutes.

L'information de parité est modifiée lors de chaque cryptopériode de sorte qu'en utilisation courante, l'unité multimédia change de clé de déchiffrement chaque fois qu'un changement de parité intervient.

En pratique, chaque message de contrôle ECM est répété de nombreuses fois. Ceci a pour but d'éviter qu'un utilisateur qui change de canal ne doive attendre trop longtemps avant d'avoir accès au contenu de ce canal. En effet, avant d'avoir accès au contenu d'un canal ou d'un événement déterminé, il est nécessaire d'obtenir la clé qui permet de déchiffrer ce contenu. En pratique, chaque message de contrôle peut être répété toutes les 50 ms. Il est clair que lorsque des messages identiques sont répétés, l'information de parité contenue dans ce message ne change pas. L'unité multimédia dispose d'un filtre qui effectue un test en particulier sur cette information de parité. Si le canal ne change pas, de même que l'information de parité, cela signifie que le message a déjà été reçu précédemment. Il ne sera donc pas traité par l'unité multimédia. Le filtre bloque donc un tel message.

Au contraire, si l'information de parité change pour deux messages consécutifs, cela signifie que le message actuel et le message précédent ne concernent pas la même cryptopériode. Le filtre doit donc laisser passer ce message de telle sorte qu'il puisse être traité. En particulier, la clé de déchiffrement ou des informations permettant d'accéder à cette clé sont extraites de ce message.

Lorsqu'un contenu est visualisé de façon "normale", c'est-à-dire à vitesse normale et en continu, l'utilisation d'une parité dans le message de contrôle fonctionne parfaitement. Par contre, pour de nouveaux modes d'utilisation introduits par de nouveaux services tels que la vidéo à la demande, en particulier des modes d'utilisation non continus ou à une vitesse différente de la vitesse normale, il pourrait arriver que le contenu ne puisse plus être déchiffré. Ceci peut se produire en particulier dans le cas de l'avance rapide ou du recul rapide.

Dans ce cas, si par exemple l'avance rapide permet de faire un saut tel que l'on passe d'une cryptopériode paire à une cryptopériode également paire, sans passer par la cryptopériode impaire intercalaire, le déchiffrement ne sera plus possible. Le document WO 2004/071091 décrit un procédé permettant d'optimiser la vitesse de déplacement lors de l'avance ou du recul rapide. Dans ce document, il est prévu un "décalage" entre le flux de données et le flux de messages de contrôle. Ce décalage est choisi de telle manière qu'un nouveau message de contrôle est envoyé sensiblement au milieu de la cryptopériode. Selon ce document, il est toutefois clair qu'il n'est pas possible de sauter une cryptopériode, faute de quoi le contenu ne peut plus être déchiffré.

Il est également possible que le déchiffrement ne puisse plus se faire lors d'un saut vers une autre partie du contenu. Ce genre de saut est géré par l'insertion de chapitres, qui permettent de se déplacer à un endroit prédéterminé du contenu, cet endroit n'étant pas choisi par l'utilisateur, mais introduit au moment de la mise en forme du contenu.

Dans les systèmes actuels, basés sur la détermination de la parité du mot de contrôle contenu dans un message, un saut d'une ou plusieurs cryptopériodes complètes ne peut pas être géré. En effet, lorsque l'on saute d'un message pair à un autre message pair, le filtre considérera qu'il n'y a pas eu de changement de message, mais qu'il s'agit simplement d'une répétition d'un message déjà reçu. Ce message sera donc éliminé par le filtre. Le système tentera de déchiffrer le contenu avec une fausse clé et ce dernier ne pourra de ce fait pas être déchiffré.

### EXPOSE DE L'INVENTION

La présente invention se propose de résoudre les problèmes des systèmes de l'art antérieur en réalisant un procédé grâce auquel il est possible de retrouver de façon sûre la clé qui doit être utilisée pour déchiffrer un contenu donné. Le contenu utilisé dans l'invention est un contenu chiffré par avance et non en temps réel au moment de sa diffusion.

De cette façon, il est possible non seulement de visualiser le contenu de façon rapide, par exemple une image visualisée toutes les n cryptopériodes, avec n>=2, ou d'effectuer des sauts à n'importe quelle position du contenu. En particulier, il est possible d'afficher une image toutes les deux ou quatre cryptopériodes par exemple, sans que cela ne pose de problèmes de déchiffrement.

Ceci est d'autant plus intéressant que l'on cherche, pour des raisons de sécurité, à utiliser des cryptopériodes de plus en plus courtes. Ceci permet de raccourcir le temps que des systèmes frauduleux ont à disposition pour déterminer le mot de contrôle utilisé pour une partie déterminée d'un événement.

En contrepartie, si l'on contraint, lors de l'avance ou du recul rapide, à afficher au moins une image par cryptopériode, la diminution de cette cryptopériode implique une diminution de la vitesse possible pour l'avance ou le recul rapide.

Grâce à l'invention, comme il est possible de déterminer sans équivoque, la clé à utiliser pour accéder à une partie déterminée du contenu, on peut s'affranchir de la nécessité d'afficher une image par cryptopériode et l'on peut ainsi avoir une vitesse rapide indépendante de la durée de la cryptopériode

Les buts de l'invention sont atteints par un procédé 1. Procédé de traitement de messages de contrôle d'un ensemble de messages de contrôle destiné à accéder à un contenu chiffré reçu sous la forme d'un flux, ces messages comportant au moins un paramètre de discrimination ayant une valeur différente pour deux messages consécutifs dans le flux et des informations d'accès à un contenu chiffré, le procédé comportant les étapes de :
- réception d'un message de contrôle courant,
- lecture du paramètre de discrimination du message de contrôle courant,
- recherche dans une mémoire, du paramètre de discrimination du message traité précédemment au message courant,
- comparaison du paramètre de discrimination du message courant avec le paramètre de discrimination du message traité précédemment, et
- blocage par le filtre dudit message de contrôle courant si l'étape de comparaison indique que le paramètre de discrimination du message courant est identique au paramètre de discrimination du message traité précédemment,
caractérisé en ce que le paramètre de discrimination (CPI) est unique et différent pour chaque message d'un sous-ensemble de l'ensemble des messages de contrôle, ce sous-ensemble contenant au moins trois messages de contrôle et au plus tous les messages de contrôle de l'ensemble de messages, de sorte que, lors de l'étape de filtrage, le message courant et le message traité précédemment peuvent être non consécutifs dans le sous-ensemble de messages.

### DESCRIPTION SOMMAIRE DES DESSINS

La présente invention et ses avantages seront mieux compris en référence aux figures annexées et à la description détaillée de différents modes de réalisation de l'invention, dans lesquelles :
- la figure 1 illustre la structure d'un message de contrôle et le filtrage d'un tel message selon l'art antérieur;
- la figure 2 illustre la structure d'un message de contrôle et le filtrage d'un tel message selon la présente invention;
- la figure 3 représente une variante de filtrage d'un message selon la figure 2; et
- la figure 4 illustre une autre variante du procédé de filtrage selon l'invention.

### MANIERES DE REALISER L'INVENTION

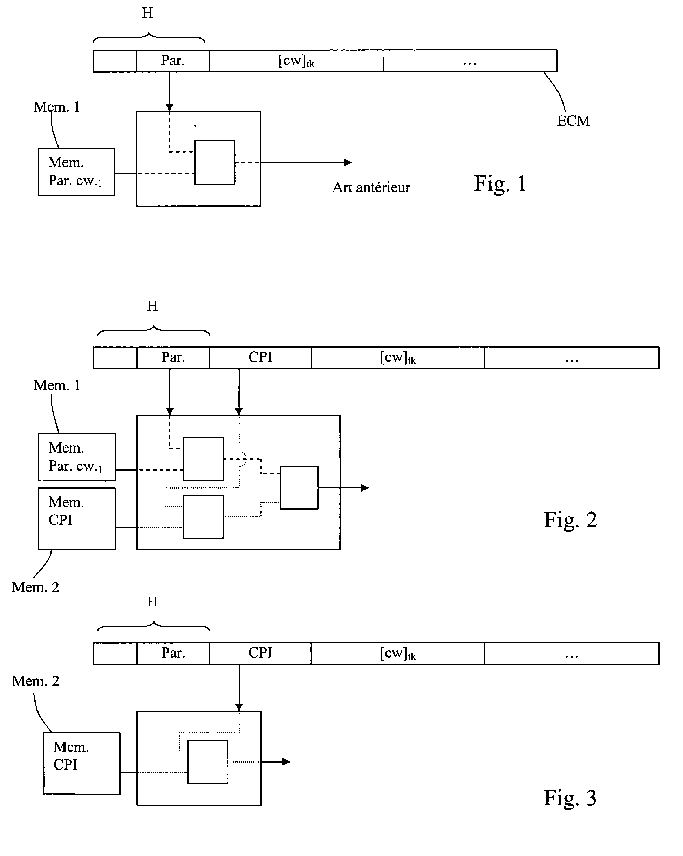

En référence à la figure 1 décrivant l'art antérieur, un message de contrôle ECM tel qu'utilisé en particulier dans le domaine de la télévision à péage comporte notamment un en-tête H, indiquant notamment que le message reçu est un message de contrôle ECM, une information de parité contenue dans cet en-tête, notée Par. sur les figures, et un mot de contrôle cw, généralement chiffré par une clé de transport notée TK sur cette figure. Il est à noter que le mot de contrôle cw pourrait être remplacé par une information permettant de déterminer ce mot de contrôle, comme cela est expliqué en détail plus bas. Un tel message de contrôle ECM contient en outre d'autres informations, en particulier des informations relatives aux longueurs des champs, des informations d'identification de ces champs et une signature du message, destinée à garantir son intégrité.

Lorsque le filtre reçoit un message de contrôle ECM, il en extrait l'information de parité. Celle-ci peut être extraite du fait qu'elle se trouve toujours au même endroit dans le message de contrôle. Le filtre agit donc sur une portion déterminée du message, ayant une longueur connue, correspondant à une "profondeur de filtrage".

Si ce filtre a déjà reçu un message précédemment, l'information de parité de ce message précédent a été mémorisée dans une mémoire Mem. 1. Si aucun message précédent n'a été reçu, la mémoire est vide. Cette mémoire est vidée par exemple lors de chaque enclenchement et/ou déclenchement de l'unité multimédia ou encore lors de chaque changement de canal.

L'information de parité du message reçu est comparée à l'information de parité mémorisée. Si ces deux parités sont identiques, le deuxième message est bloqué par le filtre et n'est donc pas traité. Par contre, si les informations de parité sont différentes ou si la mémoire est vide, le filtre laisse passer le message. Celui-ci est traité de façon conventionnelle, notamment pour en extraire le mot de contrôle.

La figure 2 illustre le traitement d'un message selon la présente invention. Ce message comporte un en-tête dans lequel se trouve une information de parité comme dans l'art antérieur. Il comporte en outre un paramètre de discrimination CPI généralement placé consécutivement à l'information de parité. Ce paramètre peut en particulier prendre la forme d'une valeur de compteur, qui est modifiée de façon incrémentale. Selon un mode de réalisation particulier de l'invention, les messages de contrôle associés à un même événement sont groupés dans un ensemble de messages. Cet ensemble est ordonné dans le sens que chaque message de contrôle contient des informations permettant d'accéder à une partie de l'événement et que l'ordre des messages correspond à l'ordre chronologique des parties de l'événement. Ainsi, deux messages de contrôle adjacents dans l'ensemble de messages correspondent à deux portions adjacentes du contenu lorsqu'il est visualisé dans l'ordre chronologique.

La taille du compteur est de préférence telle que le paramètre de discrimination ne prend jamais deux fois la même valeur pour des messages de contrôle associés à un même événement. La taille du compteur est égale à la longueur du paramètre de discrimination.

En principe, le nombre de valeurs différentes que peut prendre le compteur est au minimum égal à la durée de l'événement divisée par la durée d'une cryptopériode. Il est également possible de prévoir un système dans lequel le compteur peut prendre plus d'une fois la même valeur, à condition que ces valeurs identiques correspondent à des contenus éloignés dans le temps. Dans ce cas, deux solutions sont envisageables. Soit on interdit des sauts d'une durée égale ou supérieure à la durée séparant deux contenus correspondants à la même valeur de compteur, soit on les autorise, en prenant le risque que le système ne soit pas totalement fiable.

Ce risque pourrait par exemple être pris si la probabilité que le contenu ne puisse pas être déchiffré est très faible. A titre d'exemple, on peut imaginer un compteur pouvant prendre 2048 valeurs différentes, soit une longueur du paramètre CPI de 11 bits, et une cryptopériode de 10 secondes, ce qui correspond à une durée totale maximale de l'événement de 5 heures, 41 minutes et 20 secondes. Si l'événement considéré est plus long que cette durée et que l'utilisateur effectue un saut plus grand que cette durée, le système ne sera plus nécessairement en mesure d'accéder au contenu. Il est relativement facile de s'arranger pour qu'un tel événement ait une probabilité extrêmement faible de ce produire.

Selon une variante particulière, il est possible de prévoir que le paramètre de discrimination prend deux fois la même valeur pour des messages de contrôle associés à un même événement, pour autant que la parité de ces deux messages soit différente. Ceci peut par exemple être réalisé en utilisant un nombre impair de valeurs du compteur et en incrémentant cette valeur de 1 pour chaque message tout en alternant la parité des messages. Cette manière de faire peut présenter l'avantage qu'avec un compteur de taille réduite, le nombre de messages peut être grand, ce qui peut être intéressant lorsqu'un événement est particulièrement long.

Ainsi, pour deux messages ayant la valeur de compteur 356 par exemple, l'un sera associé à une parité paire et l'autre à une parité impaire, ce qui permettra de discriminer ces deux messages. En reprenant l'exemple précédent d'un compteur pouvant prendre 2048 valeurs et une cryptopériode de 10 secondes, il se passera plus de 11 heures avant que deux messages aient une même valeur de compteur et une même parité, et qu'ils puissent donc être confondus.

Un événement concerné par le présent procédé peut être par exemple un film, un match de sport, un fichier musical, mais il peut également être l'ensemble de ce qui est diffusé pendant une période donnée, par exemple une journée.

Le procédé de l'invention est décrit ci-dessous en supposant que l'unité multimédia est enclenchée depuis plus d'une cryptopériode et que l'utilisateur ne vient pas de changer de canal. Dans ce cas, la mémoire Mem. 1 contient un mot de contrôle CW₋₁ provenant du message traité précédemment.

L'unité multimédia comprend en outre une autre mémoire notée Mem. 2 chargée de mémoriser la valeur du paramètre de discrimination CPI du message traité précédemment.

Lorsque l'unité multimédia reçoit un message de contrôle ECM, le filtre extrait la parité PAR de ce message courant. Il compare cette parité à celle du message traité précédemment, la parité du message précédent étant stockée dans la mémoire correspondante Mem. 1. Parallèlement à ceci, le filtre extrait la valeur du paramètre de discrimination CPI du message de contrôle courant. Ceci se fait comme dans le cas de la parité, en déterminant la partie du message de contrôle ECM sur laquelle le filtre doit agir.

Il est également possible de filtrer simultanément la parité et le paramètre de discrimination en modifiant la profondeur de filtrage de telle sorte que cette profondeur inclue les deux paramètres.

Cette valeur filtrée en dernier lieu du paramètre de discrimination est comparée à la valeur du paramètre de discrimination qui a été mémorisée dans la mémoire correspondante Mem. 2. Le résultat de ces deux comparaisons, c'est-à-dire la comparaison de la parité et la comparaison de la valeur du paramètre de discrimination est traité, par exemple au moyen d'une fonction logique, de façon à bloquer les messages dont le paramètre de discrimination et la parité sont identiques au paramètre de discrimination et à la parité d'un message traité précédemment. Cela signifie qu'un message ayant une même parité que le message précédent, mais une valeur de paramètre de discrimination différente pourra passer le filtre et sera traité de façon conventionnelle. De même, un message ayant la même valeur du paramètre de discrimination qu'un message précédent, mais une parité différente pourra également passer le filtre et être traité de façon conventionnelle.

Il est à noter que les critères de comparaison des messages s'appliquent sur un sous-ensemble d'un ensemble déterminé de messages, ce sous-ensemble étant par exemple une partie de l'ensemble de tous les messages liés à un même événement. Le sous-ensemble contient au minimum trois messages de contrôle provenant des messages liés à un événement déterminé et au maximum la totalité des messages liés à cet événement.

Il est également à noter que dans le contexte de l'invention, lorsque l'on parle du message courant et du message précédent, le terme "précédent" signifie que le message de contrôle a été traité par l'unité multimédia avant le message courant. Il ne signifie par contre pas qu'il s'agit du message adjacent au message courant dans l'ensemble ordonné des messages. En effet, il est possible, par exemple en mode recul rapide, que le message courant corresponde à la 15^{ème} cryptopériode et que le message précédent corresponde à la 17^{ème} cryptopériode.

Dans le mode de réalisation illustré par la figure 3, la discrimination des messages est faite uniquement sur la base du paramètre de discrimination et pas sur la base de la parité. Comme précédemment, lorsqu'un message est reçu, la valeur du paramètre de discrimination CPI est extraite de ce message et comparée à la valeur de ce paramètre provenant du message traité précédemment. Dans ce cas également, les messages comparés sont uniquement ceux provenant d'un même ensemble de messages. Si la valeur comparée est identique à la valeur mémorisée, le message est bloqué par le filtre. Au contraire, si cette valeur ne correspond pas à la valeur mémorisée, le message passe le filtre pour être traité de façon conventionnelle.

Dans la figure 3, le message de contrôle est représenté comme comportant une information de parité. Il est toutefois également possible de supprimer cette information de parité dans le message et de n'y inclure que le paramètre de discrimination. En pratique, ceci implique toutefois une modification de la structure des messages de contrôle, ce qui n'est pas nécessairement souhaitable.

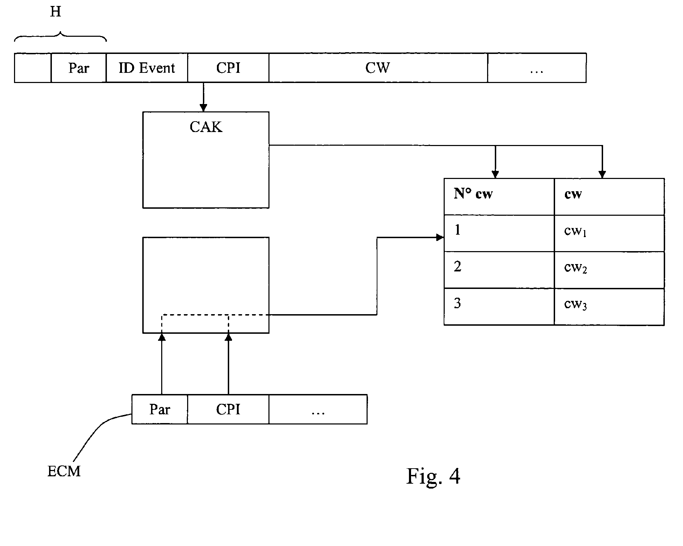

Dans le mode de réalisation de la figure 4, on envoie, en plus du flux de messages de contrôle ECM, un paquet de messages contenant les conditions d'accès au contenu chiffré, c'est-à-dire soit les mots de contrôle, soit des éléments permettant de "construire" ces mots de contrôle. Ces paquets de messages sont généralement envoyés de façon asynchrone par rapport à la diffusion des données audio/vidéo et peuvent être envoyés bien à l'avance par rapport à leur utilisation. Les messages de ces paquets contiennent en outre un index liant de façon univoque cet index et le mot de contrôle correspondant. En pratique, cet index est de préférence le paramètre de discrimination CPI, bien que d'autres index pourraient être utilisés. Les messages reçus ou du moins les mots de contrôle associés à l'index correspondant peuvent être mémorisés dans l'unité multimédia en vue de leur utilisation ultérieure.

Le flux de messages de contrôle est formé de messages comportant une information de parité ainsi qu'une valeur de paramètre de discrimination CPI. Ce flux est envoyé de façon synchrone avec l'envoi du contenu.

Lorsque l'unité multimédia reçoit un message de contrôle ECM contenant l'information de parité et le paramètre de discrimination CPI, ce message est filtré de façon identique au filtrage décrit en référence aux figures 2 et 3. Le format d'un tel message est donc compatible avec son filtrage.

Lorsqu'un tel message a été transmis par le filtre, c'est-à-dire n'a pas été bloqué, le système en extrait la valeur du paramètre de discrimination. Cette valeur est ensuite utilisée comme pointeur pour trouver quel est le mot de contrôle à utiliser. Celui-ci est ensuite recherché dans l'unité multimédia et utilisé de façon conventionnelle pour déchiffrer le contenu. Le format des messages du paquet de messages est donc compatible avec leur utilisation pour l'accès au contenu chiffré.

Ce mode de réalisation offre une sécurité accrue puisqu'une personne qui intercepte de façon illégale les messages de contrôle contenant les paramètres de discrimination ne pourra pas les utiliser sans avoir également intercepté la table donnant les mots de contrôle. Etant donné que les mots de contrôle peuvent être envoyés avant leur utilisation, il est possible de les chiffrer de façon robuste, sans porter préjudice à la qualité et la vitesse de traitement du service.

La présente invention permet d'accéder de façon sûre à n'importe quelle partie d'un contenu chiffré, sans risque que le contenu ne soit pas déchiffrable du fait que des messages de contrôle ont été rejetés par erreur. Ceci permet d'offrir à l'utilisateur des fonctions qu'il n'est pas possible de proposer avec les systèmes de l'art antérieur ou qui ne sont pas fiables, en particulier des vitesses d'avance rapide ou de recul rapide plus grandes que dans les systèmes de l'art antérieur, même si les cryptopériodes sont particulièrement courtes. De plus, des sauts sont possibles à n'importe quel endroit d'un événement, sans risque de ne pouvoir déchiffrer l'événement.

## Revendications

1. Procédé de traitement de messages de contrôle d'un ensemble de messages de contrôle destiné à accéder à un contenu chiffré reçu sous la forme d'un flux, ces messages comportant au moins un paramètre de discrimination ayant une valeur différente pour deux messages consécutifs dans le flux et des informations d'accès à un contenu chiffré, le procédé comportant les étapes de :
• réception d'un message de contrôle courant,
• lecture du paramètre de discrimination du message de contrôle courant,
• recherche dans une mémoire, du paramètre de discrimination du message traité précédemment au message courant,
• comparaison du paramètre de discrimination du message courant avec le paramètre de discrimination du message traité précédemment, et
• blocage par le filtre dudit message de contrôle courant si l'étape de comparaison indique que le paramètre de discrimination du message courant est identique au paramètre de discrimination du message traité précédemment,
**caractérisé en ce que** le paramètre de discrimination (CPI) est unique et différent pour chaque message d'un sous-ensemble de l'ensemble des messages de contrôle, ce sous-ensemble contenant au moins trois messages de contrôle et au plus tous les messages de contrôle de l'ensemble de messages, de sorte que, lors de l'étape de filtrage, le message courant et le message traité précédemment peuvent être non consécutifs dans le sous-ensemble de messages.

2. Procédé de traitement de messages de contrôle selon la revendication 1, **caractérisé en ce que** ledit flux est un flux de vidéo à la demande et **en ce que** l'utilisateur est autorisé à naviguer dans ce flux en modes rapides vers l'avant et vers l'arrière et en effectuant des sauts d'une partie du contenu à une autre partie de ce contenu.

3. Procédé de traitement de messages de contrôle selon la revendication 2, **caractérisé en ce que** le nombre de messages dudit sous-ensemble de messages est déterminé en fonction du saut maximal autorisé dans le contenu.

4. Procédé de traitement de messages de contrôle selon la revendication 1, **caractérisé en ce qu'**au moins certains des messages de contrôle (ECM) comportent en outre une information de parité (Par) permettant de signaler un changement de message de contrôle d'un message courant à un message adjacent dans ledit flux.

5. Procédé de traitement de messages de contrôle selon la revendication 4, **caractérisé en ce que** l'étape de comparaison est effectuée sur l'information de parité (Par) et sur la valeur du paramètre de discrimination (CPI).

6. Procédé de traitement de messages de contrôle selon la revendication 1, **caractérisé en ce qu'**il comporte une étape de réception préalable d'un paquet de messages, les messages de ce paquet contenant lesdites informations d'accès au contenu chiffré, ainsi qu'un index lié à ces informations d'accès.

7. Procédé de traitement de messages de contrôle selon la revendication 6, **caractérisé en ce que** ledit paramètre de discrimination (CPI) sert de pointeur pour l'index lié auxdites informations d'accès au contenu chiffré.

8. Procédé de traitement de messages de contrôle selon la revendication 7, **caractérisé en ce que** les messages dudit paquet de messages ont un format compatible avec leur utilisation pour l'accès au contenu chiffré et **en ce que** les messages de l'ensemble de messages de contrôle ont un format compatible avec leur filtrage.

9. Procédé de traitement de messages de contrôle selon la revendication 1, **caractérisé en ce que** la mémoire stockant les valeurs des paramètres de discrimination est vidée lors de chaque enclenchement et/ou déclenchement de l'unité multimédia et/ou de changement de canal.
